# EUROPÄISCHE PATENTSCHRIFT

(11) **EP 3 227 361 B1**
(45) Veröffentlichungstag und Bekanntmachung des Hinweises auf die Patenterteilung: **16.11.2022**
(21) Anmeldenummer: 15804130.1
(22) Anmeldetag: 03.12.2015
(51) Int. Cl.: C08J 5/04, C08L 91/06, C08J 5/10, C08K 3/26, C08L 1/02, C08L 97/02, C09J 191/06

(54) **VERWENDUNG EINES THERMOPLASTISCHEN GUSSMATERIALS FÜR DIE HERSTELLUNG VON BEHÄLTNISSEN UND VERPACKUNGSMITTELN UND VERFAHREN ZUR HERSTELLUNG EINES BEHÄLTNISSES**
USE OF A THERMOPLASTIC CASTING MATERIAL FOR THE MANUFACTURE OF CONTAINERS AND PACKAGING MEANS AND METHOD FOR THE MANUFACTURE OF A CONTAINER
UTILISATION D'UN MATÉRIAU DE MOULAGE THERMOPLASTIQUE POUR LA FABRICATION DE RÉCIPIENTS ET D'EMBALLAGES ET PROCÉDÉ DE FABRICATION D'UN RÉCIPIENT

(30) Priorität: 04.12.2014 AT 508812014
(43) Veröffentlichungstag der Anmeldung: 11.10.2017
(73) Patentinhaber: Waxell GmbH, 1160 Wien (AT)
(72) Erfinder: STEFANSKI, Claus, 1070 Wien (AT)
(74) Vertreter: Puchberger & Partner Patentanwälte
(86) Internationale Anmeldenummer: PCT/EP2015/078446
(87) Internationale Veröffentlichungsnummer: WO 2016/087558

(56) Entgegenhaltungen:
- EP-A1- 1 672 032
- WO-A1-01/62833
- WO-A1-2012/035102
- DE-A1-102010 000 695
- DE-U1-202006 001 786
- KR-A- 20090 008 116
- KR-A- 20090 008 117
- US-A1- 2013 225 020
- Anonymous: "UZH - Moulagenmuseum - Technik der Moulagenherstellung", , 11. Februar 2013 (2013-02-11), XP055248502, Gefunden im Internet: URL:http://www.moulagen.uzh.ch/geschichte- technik/herstellung.html [gefunden am 2016-02-08]
- DATABASE WPI Week 200713 Thomson Scientific, London, GB; AN 2007-128691 XP002754134, -& JP 2007 001993 A (KAO CORP) 11. Januar 2007 (2007-01-11)

## Beschreibung

Die Erfindung betrifft die Verwendung eines thermoplastischen Gussmaterials für die Herstellung von Behältnissen, sowie ein Verfahren zur Herstellung derartiger Behältnisse.

Thermoplastische Gussmaterialien sind seit langer Zeit bekannt und auch die Herstellung von Gegenständen wie Behältnissen aus solchen Gussmaterialien sind Stand der Technik. Beispielsweise ist eine dauerplastische Modelliermasse aus der DE 20 2006 001 786 U1 bekannt. Die WO 2012/035102 A1 beschreibt eine stearinbasierte Gießmasse zum Herstellen von Abgüssen. Gießverfahren zum Herstellen von Abgüssen werden unter anderem in der WO 01/62833 A1 oder in der US 2013/225020 A1 beschrieben. Die Verwendung eines wachs- und füllstoffhaltigen thermoplastischen Gussmaterials zur Herstellung von Behältern und Verpackungmitteln ist aus KR 2009 0008117 A bekannt.

Ziel der vorliegenden Erfindung ist es, einfach und günstig umweltfreundliche Flaschen und Dosen sowie andere Gegenstände herzustellen, wie beispielsweise Verpackungslinien und Behältnisse für flüssige Biokosmetikprodukte. Glasflaschen haben den Nachteil der Bruchgefahr und Kunststoffe wie auch Biokunststoffe sind für manche Anwendungszwecke, beispielsweise aus ästhetischen Gründen oder aus ökologischen Gründen, nicht erwünscht.

Aufgabe der Erfindung war es, derartige Behältnisse zumindest zum größten Teil aus natürlichen und ungiftigen Rohstoffen herzustellen. Derartige Behältnisse sollten auch mit einfachen Mitteln herzustellen sein und die erforderliche Festigkeit sowie unbedenkliche Entsorgungsmöglichkeiten bieten.

Die Erfindung ist in den beigefügten Ansprüchen definiert.

Das thermoplastische Gussmaterial ist dadurch gekennzeichnet, dass das Gussmaterial ein in Hitze fließfähiges und bei Umgebungstemperatur festes Bindemittel und zumindest einen bei Schmelztemperatur des Bindemittels nicht schmelzenden Zuschlagstoff enthält.

Erfindungsgemäß besteht das Bindemittel aus einen oder mehreren Stoffen aus der Gruppe Pflanzenwachs, Tierwachs, Paraffinwachs, Montanwachs und Sterin.

Bei der Verwendung von Wachsen hat sich herausgestellt, dass diese nicht die notwendige Festigkeit aufweisen. Gemäß Erfindung hat sich überraschend gezeigt, dass durch Zugabe eines Zuschlagstoffes die Festigkeit erheblich erhöht werden kann. Erfindungsgemäß enthält dieser Zuschlagstoff Faserstoffe und Füllstoffe. Der Zuschlagstoff kann ferner ein oder mehrere Stoffe aus der Gruppe Farbstoffe, Glanzstoffe, Viskosität beeinflussende Stoffe, Dekorationsstoffe und/oder Duftstoffe enthalten.

Die Glanzstoffe sind bevorzugt aus Naturharz und/ oder Schellack. Diese Stoffe dienen auch der Oberflächenversiegelung und als Bindemittel. Die Naturharze können beispielweise aus der Gruppe Dammar, Ester Gum, Glycerinester aus Wurzelharz (E 445), Gum Benzoe, Gum Elemi, Gum Mastix, Gum Sandarac, Kolophonium, Kopal Manila ausgewählt sein.

In vorteilhafter Weise werden die Faserstoffe aus folgender Gruppe ausgewählt:
- Naturfasern, Pflanzenfasern, Wolle, Haare, Seiden, Mineralfasern geologischen Ursprungs
- Chemiefasern aus natürlichen Polymeren wie Viskose, Modal, Lyocell, Cupro, Acetat, Triacetat, Gummi, Pflanzeneiweiß, Tiereiweiß, Stärke, Glukose, Alginat, Chitosan
- Chemiefasern aus synthetischen Polymeren wie Polyester, Polyamid, Aramid
- Chemiefasern aus industriell erzeugten anorganischen Fasern wie Glas, Kohlenstoff, Keramik, Metall
- Textilfasern
- Papierfasern
- Recyclatfasern.

Die Faserstoffe können in ihrer Länge variieren. Bevorzugt ist die Faserlänge kleiner 10 mm, besonders bevorzugt kleiner 2 mm, insbesondere liegt sie zwischen 0,01 und 1 mm.

Die Füllstoffe werden bevorzugt aus der folgenden Gruppe ausgewählt:
pulverisierte Materialien, einzeln wie auch als Mischung, wie Annaline, Basalt, Bims, Dolomit, Glas, Granat, Granit, Holzasche, Kaolinpulver, Knochenasche, Marmor, Meerschaum, Molkeprotein, Quarz, Schamotte, Schlämmkreide, Seidenprotein, Siliziumoxid, Talkum, Vulkanasche, Bentonit, Cristobalit, Glimmer, Kieselgur, Montmorillonit, Neuburger Kieselerde, Wollastonite, Zeolith.

Nach weiteren Merkmalen enthält das Gussmaterial bis zu 30 Gew.-% Faserstoff. Weiters kann das Gussmaterial bis zu 90 Gew.-% Füllstoff enthalten. Bevorzugt kann das Gussmaterial bis zu 75 Gew.-% Füllstoff und bis zu 25 Gew.-% Faserstoff, gemeinsam aber niemals mehr als 95 Gew.-% bezogen auf das Gesamtgewicht des Gussmaterials, enthalten. Besonders bevorzugt ist das Wachs Carnaubawachs.

Das Gussmaterial wird zur Herstellung von Behältnissen verwendet. In diesen Behältnissen können die Flüssigkeiten oder pulver- oder rieselförmigen Substanzen, wie z.B. Waschmittel, Parfüms etc. eingefüllt und zusätzlich auch mit dem Gussmaterial verschlossen werden. Dabei kann das Verschließen unter Luftausschluss erfolgen, indem das Gussmaterial in flüssiger oder viskoser Schicht über die Öffnung des gefüllten Behältnisses gegossen oder darüber gelegt wird. Unter Verdrängen der Luft verfestigt sich der Verschluss, bis er wieder geöffnet wird.

Die Herstellungsverfahren für Gegenstände wie Behältnisse sind der bekannten Technologie entnehmbar. Beispielsweise kann das Gussmaterial in flüssiger Form in eine entsprechende Form eingegossen werden und nach einer gewissen Abkühlungszeit etwaiges noch flüssiges Material ausgegossen werden, sodass ein Behältnis entsteht. Bei Unterschreiten der Schmelztemperatur wird durch Abkühlung ein Verfestigungspunkt erreicht, bei dem die Form geöffnet und der Gegenstand entnommen werden kann. Neben diesem Sturzgussverfahren können auch andere Verfahren angewendet werden, wie Spritzgießen, Spritzpressen, Strangpressen, Tiefziehen, Kalandrieren, Rotationsguss, Drucksackverfahren, sowie Innendruckspritzgießen

Wenn Wachsmischungen gemäß Erfindung auf z.B. 90 bis 100°C erhitzt werden, ist das Gussmaterial flüssig. Beim Abkühlen auf z.B. 50 bis 60°C, ist das Material steif genug, um den Entformungsvorgang einleiten zu können. Die Härte des hergestellten Gegenstandes und dessen Festigkeit kann durch Wahl der Zuschlagstoffe und deren Gewichtsanteil in der Gussmasse bestimmt werden. Die Faserstoffe ergeben insbesondere in Kombination mit Füllstoffen, wie z.B. Schlämmkreide oder Kaolin Behältnisse mit hoher Bruchfestigkeit.

Ein besonderer Vorteil der Behältnisse oder Gegenstände aus dem Gussmaterial besteht in der angenehmen Haptik, da sich die Oberfläche leicht wachsig und angenehm anfühlt. Da Naturwachse biologisch abgebaut werden, können die Gegenstände leicht entsorgt werden, da sie ökologisch unbedenklich sind.

Nachstehend Beispiele für das Gussmaterial, die nicht einschränkend sind:

### Beispiel 1

Herstellung eines Gefäßes im Sturzgussverfahren

| | |
|---|---|
| Gussmaterial: | 31 Gew.-% Carnaubawachs |
| | 65 Gew.-% Calziumkarbonat |
| | 4 Gew.-% Cellulosefasern |

Das Gussmaterial wird erhitzt bis es dünnflüssig ist und dann in die Gussform gegossen. Nach einer genügenden Zeit je nach Wärmeleitfähigkeit der Form - wird der noch flüssige Teil des Gussmaterials ausgegossen, die Form geöffnet und das sich gebildete Gefäß entnommen.

Die Anteile der Inhaltsstoffe können breit variieren, beispielsweise 25 - 35 Gew.-% Carnaubawachs, 60 - 70 Gew.-% Calziumkarbonat, 3 - 7 Gew.-% Cellulosefasern.

### Beispiel 2

Versiegelung eines Gefäßes

| | |
|---|---|
| Gussmaterial: | 37 Gew.-% Bienenwachs |
| | 60 Gew.-% Calziumkarbonat |
| | 3 Gew.-% Cellulosefasern |

Das Gussmaterial wird zähflüssig erhitzt und über die Füllöffnung des Gefäßes gegossen, nachdem es vorher mit einem Füllgut gefüllt wurde. Alternativ kann aus der Gussmasse eine plastischweiche Platte geformt werden, die über die Füllöffnung gelegt und ausgepresst wird.

Die Anteile der Inhaltsstoffe können breit variieren, beispielsweise 35 - 40 Gew.-% Bienenwachs, 55 - 65 Gew.-% Calziumkarbonat, 2 - 5 Gew.-% Cellulosefasern.

Aus dem Gussmaterial können Verpackungsmittel hergestellt werden, wie Gefäße, Fläschchen und andere Behälter, sowie deren Verschlüsse und Deckel.

## Patentansprüche

1. Verwendung eines thermoplastischen Gussmaterials für die Herstellung von Behältnissen und Verpackungsmitteln, deren Deckel und Verschlüsse, wobei das Gussmaterial ein in Hitze fließfähiges und bei Umgebungstemperatur festes Bindemittel und zumindest einen bei Schmelztemperatur des Bindemittels nicht schmelzenden Zuschlagstoff enthält, **dadurch gekennzeichnet, dass** das Bindemittel ein oder mehrere Stoffe aus der Gruppe Pflanzenwachs, Tierwachs, Paraffinwachs, Montanwachs und Stearin enthält und daß der Zuschlagstoff Faserstoffe und Füllstoffe enthält.

2. Verwendung nach Anspruch 1, **dadurch gekennzeichnet, dass** der Zuschlagstoff ferner ein oder mehrere Stoffe aus der Gruppe Farbstoffe, Glänzstoffe, Viskosität beeinflussende Stoffe, Dekorationsstoffe und/oder Duftstoffe enthält.

3. Verwendung nach Anspruch 1 oder 2, **dadurch gekennzeichnet, dass** die Faserstoffe aus folgender Gruppe ausgewählt sind:
- Naturfasern, Pflanzenfasern, Wolle, Haare, Seiden, Mineralfasern geologischen Ursprungs
- Chemiefasern aus natürlichen Polymeren wie Viskose, Modal, Lyocell, Cupro, Acetat, Triacetat, Gummi, Pflanzeneiweiß, Tiereiweiß, Stärke, Glukose, Alginat, Chitosan
- Chemiefasern aus synthetischen Polymeren wie Polyester, Polyamid, Aramid
- Chemiefasern aus industriell erzeugten anorganischen Fasern wie Glas, Kohlenstoff, Keramik, Metall
- Textilfasern
- Papierfasern
- Recyclatfasern.

4. Verwendung nach einem der Ansprüche 1 bis 3, **dadurch gekennzeichnet, dass** die Füllstoffe aus der folgenden Gruppe ausgewählt sind:
pulverisierte Materialien, einzeln wie auch als Mischung, wie Annaline, Basalt, Bims, Dolomit, Glas, Granat, Granit, Holzasche, Kaolinpulver, Knochenasche, Marmor, Meerschaum, Molkeprotein, Quarz, Schamotte, Schlämmkreide, Seidenprotein, Siliziumoxid, Talkum, Vulkanasche, Bentonit, Cristobalit, Glimmer, Kieselgur, Montmorillonit, Neuburger Kieselerde, Wollastonite, Zeolith.

5. Verwendung nach einem der Ansprüche 1 bis 4, **dadurch gekennzeichnet, dass** das Gussmaterial bis zu 30 Gew.-% Faserstoff enthält, und/oder dass das Gussmaterial bis zu 90 Gew.-% Füllstoff enthält.

6. Verwendung nach einem der Ansprüche 1 bis 5, **dadurch gekennzeichnet, dass** das Gussmaterial bis zu 75 Gew.-% Füllstoff und bis zu 25 Gew.-% Faserstoff, gemeinsam aber niemals mehr als 95 Gew.-% bezogen auf das Gesamtgewicht des Gussmaterials, enthält.

7. Verwendung nach einem der Ansprüche 1 bis 6, **dadurch gekennzeichnet, dass** das Wachs Carnaubawachs ist.

8. Verwendung eines Gussmaterials zur Herstellung eines Behältnisses nach einem der Ansprüche 1 bis 7, **dadurch gekennzeichnet, dass** es
- 25 - 35 Gew.-% bevorzugt etwa 31 Gew.-% Carnaubawachs,
- 60 - 70 Gew.-% bevorzugt 65 Gew.-% Calziumkarbonat,
- 3 - 7 Gew.-% bevorzugt 4 Gew.-% Cellulosefasern
enthält.

9. Verwendung eines Gussmaterials zur Herstellung eines Behältnisses nach einem der Ansprüche 1 bis 7, **dadurch gekennzeichnet, dass** es
- 35 - 40 Gew.-% bevorzug, 37 Gew.-% Bienenwachs
- 55 - 65 Gew.-% bevorzugt 60 Gew.-% Calziumkarbonat
- 2 - 5 Gew.-% bevorzugt 3 Gew.-% Cellulosefasern
enthält.

10. Verwendung nach einem der Ansprüche 1 bis 9, **dadurch gekennzeichnet, dass** die Länge der Fasern kleiner 10 mm, bevorzugt kleiner 2 mm ist und insbesondere zwischen 0,01 und 1 mm liegt.

11. Verwendung nach einem der Ansprüche 1 bis 10, **dadurch gekennzeichnet, dass** die Glanzstoffe aus der Gruppe Naturharze und Schellack ausgewählt sind.

12. Verwendung nach Anspruch 11, **dadurch gekennzeichnet, dass** Naturharze aus der Gruppe Dammar, Ester Gum, Glycerinester aus Wurzelharz (E 445), Gum Benzoe, Gum Elemi, Gum Mastix, Gum Sandarac, Kolophonium, Kopal Manila ausgewählt sind.

13. Verfahren zur Herstellung eines Behältnisses nach einem der Ansprüche 1 bis 12, **dadurch gekennzeichnet, dass** das Formgebungsverfahren aus folgender Gruppe ausgewählt ist:
- Sturzgussverfahren
- Spritzgießen
- Spritzpressen
- Strangpressen
- Tiefziehen
- Kalandrieren
- Rotationsguss
- Drucksackverfahren
- Innendruckspritzgießen.

14. Verfahren zur Herstellung eines Behältnisses nach Anspruch 13, **dadurch gekennzeichnet, dass** das Bindemittel auf Schmelztemperatur erhitzt wird und die Zuschlagsstoffe im Bindemittel verteilt werden, sodass das Gussmaterial gebildet wird, dass eine die äußere Form des Gegenstandes bestimmende Form vorgesehen und das Gussmaterial eingegossen wird, dass das Gussmaterial teilweise erhärten gelassen wird und dass gegebenenfalls das überschüssige noch flüssige Gussmaterial entfernt und die Form vom gebildeten Gegenstand entfernt wird.

15. Behälter und Verpackung, **dadurch gekennzeichnet, dass** sie aus einem Gussmaterial hergestellt sind, das ein in Hitze fließfähiges und bei Umgebungstemperatur festes Bindemittel und zumindest einen bei Schmelztemperatur des Bindemittels nicht schmelzenden Zuschlagstoff enthält, wobei das Bindemittel ein oder mehrere Stoffe aus der Gruppe Pflanzenwachs, Tierwachs, Paraffinwachs, Montanwachs und Stearin enthält und der Zuschlagstoff Faserstoffe und Füllstoffe enthält.

## Claims

1. A use of a thermoplastic casting material for the production of containers and packaging means, their covers and closures, the casting material containing a binder which is flowable under heat and solid at ambient temperature and at least one additive which does not melt at the melting temperature of the binder, **characterised in that** the binder contains one or more substances from the group comprising vegetable wax, animal wax, paraffin wax, montan wax and stearin, and **in that** the additive contains fibrous and filling materials.

2. The use according to claim 1, **characterised in that** the additive further contains one or more substances from the group comprising dyes, brighteners, viscosity-influencing substances, decorating substances and/or fragrances.

3. The use according to claim 1 or 2, **characterised in that** the fibrous materials are selected from the following group:
- Natural fibres, plant fibres, wool, hair, silk, mineral fibres of geological origin
- Man-made fibres from natural polymers such as viscose, modal, lyocell, cupro, acetate, triacetate, gum, plant protein, animal protein, starch, glucose, alginate, chitosan
- Man-made fibres from synthetic polymers such as polyester, polyamide, aramid
- Man-made fibres from industrially produced inorganic fibres such as glass, carbon, ceramics, metal
- Textile fibres
- Paper fibres
- Recycled fibres.

4. The use according to one of claims 1 to 3, **characterised in that** the filling materials are selected from the following group: powdered materials, individually as well as in a mixture, such as annaline, basalt, pumice, dolomite, glass, garnet, granite, wood ash, kaolin powder, bone ash, marble, meerschaum, whey protein, quartz, chamotte, precipitated chalk, silk protein, silicon oxide, talc, volcanic ash, bentonite, cristobalite, mica, diatomaceous earth, montmorillonite, Neuburg Siliceous Earth, wollastonites, zeolite.

5. The use according to one of claims 1 to 4, **characterised in that** the casting material contains up to 30 wt.-% fibrous material and/or **in that** the casting material contains up to 90 wt.-% filling material.

6. The use according to one of claims 1 to 5, **characterised in that** the casting material contains up to 75 wt.-% filling material and up to 25 wt.-% fibrous material, together never more than 95 wt.-% based on the total weight of the casting material.

7. The use according to one of claims 1 to 6, **characterised in that** the wax is carnauba wax.

8. The use of a casting material for producing a container according to one of claims 1 to 7, **characterised in that** it contains
- 25 - 35 wt.-%, preferably about 31 wt.-% carnauba wax,
- 60 - 70 wt.-%, preferably about 65 wt.-% calcium carbonate,
- 3 - 7 wt.-%, preferably 4 wt.-% cellulose fibres.

9. The use of a casting material for producing a container according to one of claims 1 to 7, **characterised in that** it contains
- 35 - 40 wt.-%, preferably 37 wt.-% beeswax
- 55 - 65 wt.-%, preferably about 60 wt.-% calcium carbonate
- 2 - 5 wt.-%, preferably 3 wt.-% cellulose fibres.

10. The use according to one of claims 1 to 9, **characterised in that** the length of the fibres is less than 10 mm, preferably less than 2 mm, in particular between 0.01 and 1 mm.

11. The use according to one of claims 1 to 10, **characterised in that** the brighteners are selected from the group comprising natural resins and shellac.

12. The use according to claim 11, **characterised in that** natural resins are selected from the group comprising dammar, ester gum, glycerol ester of root rosin (E 445), gum benzoin, gum elemi, gum mastic, gum sandarac, rosin, copal manila.

13. A method for producing a container according to one of claims 1 to 12, **characterised in that** the moulding process is selected from the group comprising:
- Slush moulding
- Injection moulding
- Transfer moulding
- Extrusion
- Deep drawing
- Calendering
- Rotational moulding
- Bladder moulding
- Internal pressure injection moulding

14. The method for producing a container according to claim 13, **characterised in that** the binder is heated to melting temperature and the additives are distributed in the binder so that the casting material is formed, **in that** a mould defining the outer shape of the object is provided and the casting material is poured in, **in that** the casting material is made to partially harden and **in that**, if necessary, the excess casting material which is still liquid is removed and the mould is removed from the formed object.

15. Containers and packaging, **characterised in that** they are produced from a casting material containing a binder which is flowable under heat and solid at ambient temperature and at least one additive which does not melt at the melting temperature of the binder, wherein the binder contains one or more substances from the group comprising vegetable wax, animal wax, paraffin wax, montan wax and stearin, and **in that** the additive contains fibrous and filling materials.

## Revendications

1. Utilisation d'un matériau de moulage thermoplastique pour la fabrication de récipients et de moyens d'emballage, de leurs couvercles et de leurs fermetures, le matériau de moulage contenant un liant fluide à la chaleur et solide à la température ambiante et au moins un additif ne fondant pas à la température de fusion du liant, **caractérisée en ce que** le liant contient une ou plusieurs substances du groupe comprenant cire végétale, cire animale, cire de paraffine, cire de lignite et stéarine et **en ce que** l'additif contient des matières fibreuses et des charges.

2. Utilisation selon la revendication 1, **caractérisée en ce que** l'additif contient en outre une ou plusieurs substances du groupe comprenant colorants, substances de brillance, substances influençant la viscosité, substances de décoration et/ou substances parfumantes.

3. Utilisation selon la revendication 1 ou 2, **caractérisée en ce que** les matières fibreuses sont choisies dans le groupe suivant:
- Fibres naturelles, fibres végétales, laine, cheveux, soie, fibres minérales d'origine géologique
- Fibres chimiques en polymères naturels comme viscose, modal, lyocell, cupro, acétate, triacétate, caoutchouc, protéines végétales, protéines animales, amidon, glucose, alginate, chitosan
- Fibres chimiques en polymères synthétiques comme polyester, polyamide, aramide
- Fibres chimiques en fibres inorganiques produites industriellement, comme verre, carbone, céramique, métal
- Fibres textiles
- Fibres de papier
- Fibres recyclées.

4. Utilisation selon l'une des revendications 1 à 3, **caractérisée en ce que** les charges sont choisies dans le groupe suivant : matériaux pulvérisés, seuls ou en mélange, comme annaline, basalte, pierre ponce, dolomite, verre, grenat, granit, cendre de bois, poudre de kaolin, cendre d'os, marbre, écume de mer, protéine de lactosérum, quartz, chamotte, craie de boue, protéine de soie, oxyde de silicium, talc, cendre volcanique, bentonite, cristobalite, mica, diatomite, montmorillonite, silice de Neubourg, wollastonite, zéolite.

5. Utilisation selon l'une des revendications 1 à 4, **caractérisée en ce que** le matériau de moulage contient jusqu'à 30 % en poids de matière fibreuse, et/ou **en ce que** le matériau de moulage contient jusqu'à 90 % en poids de charge.

6. Utilisation selon l'une des revendications 1 à 5, **caractérisée en ce que** le matériau de moulage contient jusqu'à 75 % en poids de charge et jusqu'à 25 % en poids de matière fibreuse, mais ensemble jamais plus de 95 % en poids par rapport au poids total du matériau de moulage.

7. Utilisation selon l'une des revendications 1 à 6, **caractérisée en ce que** la cire est de la cire de carnauba.

8. Utilisation d'un matériau de moulage pour la fabrication d'un récipient selon l'une des revendications 1 à 7, **caractérisée en ce qu'**il contient
- 25 à 35 % en poids, de préférence environ 31 % en poids de cire de carnauba,
- 60 à 70 % en poids, de préférence 65 % en poids de carbonate de calcium,
- 3 à 7 % en poids, de préférence 4 % en poids de fibres de cellulose.

9. Utilisation d'un matériau de moulage pour la fabrication d'un récipient selon l'une des revendications 1 à 7, **caractérisée en ce qu'**il contient
- 35 à 40 % en poids, de préférence 37 % en poids de cire d'abeille
- 55 à 65 % en poids, de préférence 60 % en poids de carbonate de calcium
- 2 à 5 % en poids, de préférence 3 % en poids de fibres de cellulose.

10. Utilisation selon l'une des revendications 1 à 7, **caractérisée en ce que** la longueur des fibres est inférieure à 10 mm, de préférence inférieure à 2 mm, et est notamment comprise entre 0,01 et 1 mm.

11. Utilisation selon l'une des revendications 1 à 10, **caractérisée en ce que** les substances de brillance sont choisis dans le groupe comprenant résines naturelles et shellac.

12. Utilisation selon la revendication 11, **caractérisée en ce que** les résines naturelles sont choisies dans le groupe comprenant dammar, gomme d'ester, ester de glycérine de résine de bois (E 445), gomme de benjoin, gomme d'élémi, gomme de mastic, gomme de sandaraque, colophane, copal de Manille.

13. Procédé de fabrication d'un récipient selon l'une des revendications 1 à 12, **caractérisé en ce que** le procédé de moulage est choisi dans le groupe suivant :
- Moulage par embouage
- Moulage par injection
- Moulage par transfert
- Extrusion
- Emboutissage
- Calandrage
- Rotomoulage
- Moulage par vessie
- Moulage par injection à pression interne.

14. Procédé de fabrication d'un récipient selon la revendication 13, **caractérisé en ce que** le liant est chauffé à la température de fusion et les additifs sont répartis dans le liant de manière à former le matériau de moulage, **en ce qu'**un moule déterminant la forme extérieure de l'objet est prévu et le matériau de moulage est coulé, **en ce que** le matériau de moulage est laissé durcir partiellement et **en ce que**, le cas échéant, le matériau de moulage en excès encore liquide est retiré et le moule est retiré de l'objet formé.

15. Récipient et emballage, **caractérisés en ce qu'**ils sont fabriqués à partir d'un matériau de moulage contenant un liant fluide à la chaleur et solide à la température ambiante et au moins un additif ne fondant pas à la température de fusion du liant, **caractérisée en ce que** le liant contient une ou plusieurs substances du groupe comprenant cire végétale, cire animale, cire de paraffine, cire de lignite et stéarine et **en ce que** l'additif contient des matières fibreuses et des charges.
